# EUROPEAN PATENT APPLICATION

(11) **EP 3 181 648 A1**
(43) Date of publication of application: **21.06.2017**
(21) Application number: 15200075.8
(22) Date of filing: 15.12.2015
(51) Int. Cl.: C09J 123/08

(54) **HOT MELT ADHESIVE COMPOSITION MADE FROM METALLOCENE CATALYZED ETHYLENE BASED PLASTOMER**

(71) Applicant: Borealis AG, 1220 Vienna (AT)
(72) Inventor: Tran, Anh Tuan, 4020 Linz (AT); Knaepen, Marc, 3400 Landen (BE)
(74) Representative: Campbell, Neil Boyd

(57) **Abstract**

Novel hot melt adhesive composition which is mainly composed of a specific metallocene catalyzed ethylene based plastomer and optionally one or more tackifiers and/or plasticizers as well as to its use.

## Description

The present invention is related to a novel hot melt adhesive composition which is mainly composed of a specific metallocene catalyzed ethylene based plastomer and optionally one or more tackifiers and/or plasticizers as well as to its use.

### Background

Hot melt adhesives (HMAs) are used in many areas of commerce as for example bookbinding, consumer and industrial packaging, diapers, furniture, footwear and the like. HMAs are in principle composed of a polymer base resin as main component, optionally one or more tackifiers and/or plasticizers.
Suitable polymer base resins are high molecular weight polymers acting as binder and providing mainly the mechanical properties of the adhesive, like ethylene vinyl acetate (EVA), styrenic blockcopolymers (like styrene-isoprene-styrene SIS, or styrene-butadiene-styrene SBS), low density polyethylene, atactic polypropylene, reactive polyurethanes, polyamides, polyesters and homogeneous linear ethylene/α-olefin copolymers.
Tackifiers are added to provide and enhance the adhesion properties of the adhesive. An excellent compatibility is needed between this material and the polymer base resin.
Suitable plasticizer are added to control (or reduce) the viscosity of the blends and enabling the adhesive to be handled by simple machine.
On top, the addition of waxes, fillers, colour pigments and stabilisers are optional.

EVA is so far one of the most commonly used polymer base resin for hot melt adhesive applications. Besides its good performance, e.g. cohesive strength, flexibility, viscosity, filmability, this material however has quite some disadvantages, like the presence of vinyl acetate (VA) in the polymer structure, since the presence of VA monomers causes issues with odour, volatile and emissions.
In addition, due to high content of VA, the polarity of EVA copolymer increases. This can cause drastical reduction of compatibility between EVA and apolar waxes for hot melt adhesives (typically expressed as cloud point). A further disadvantage is the low level of moisture resistance (so low barrier property).

Hot melt adhesives comprised of polymers other than those incorporating vinyl acetate have also been disclosed in the prior art. For instance, US 5 021 257 discloses a hot-melt adhesive composition having a viscosity of about 30 to about 250 grams/(cm.second) (about 3000 to about 25000 centipoise) at 135°C, and a Ring and Ball softening point of about 90°C to about 125°C, said adhesive composition comprising a blend of at least one substantially amorphous propylene/hexene copolymer, at least one tackifier, and at least one substantially crystalline, low viscosity hydrocarbon wax.

US 5 530 054 claims a hot melt adhesive composition consisting essentially of: (a) 30 percent to 70 percent by weight of a copolymer of ethylene and about 6 percent to about 30 percent by weight of a C₃ to C₂₀ α-olefin produced in the presence of a catalyst composition comprising a metallocene and an alumoxane and having an M_{w} of from about 20 000 to about 100 000; and (b) a hydrocarbon tackifier which is selected from a recited list. Exemplified are compositions consisting of 45 weight percent of ethylene/butene-1 copolymer having a specific gravity of either 898 kg/m³ or 901 kg/m³.

US 5 548 014 claims a hot melt adhesive composition comprising a blend of ethylene/alpha-olefin copolymers wherein the first copolymer has a Mw from about 20 000 to about 39 000 and the second copolymer has a Mw from about 40 000 to about 100 000. The lowest density copolymer exemplified has a specific gravity of 894 kgm³.
Exemplified are hot melt adhesives having a high viscosity ranging between 4300 cps (43 grams/(cm·second)) and 180000 cps (1800 grams/(cm·second)), with most of the examples being at least 10000 cps (100 grams/(cm·second)) at 180°C, such formulations being regarded as too high in viscosity for use on standard hot melt extrusion type application equipment at low application temperatures by US 6 107 430.

US 6 107 430 itself discloses hot melt adhesives comprising at least one homogeneous linear or substantially linear interpolymer of ethylene with at least one C₂ - C₂₀ α-olefin interpolymer having a density from 850 to 895 kg/m³, a melt index (MFR₂ at 190°C, 2.16kg) of at least 200 g/10 min and a viscosity of maximum 18000 cps (180 grams/(cm·second)), at 177°C, optionally at least one tackifying resin; and optionally at least one wax, wherein the hot melt adhesive has a viscosity of less than about 50 grams/(cm.second) (about 5000 cP) at 150°C.

Also EP 0 886 656 B1 discloses hot melt adhesives comprising from 5 to 95 weight percent at least one homogeneous linear or substantially linear interpolymer of ethylene with at least one α-olefin comonomer having a polydispersity index, Mw/Mn, of from 1.5 to 2.5, and a density from 850 to 885 kg/m³, from 5 to 95 weight percent of at least one tackifying resin; and optionally at least one wax.

Hot melt adhesives comprising these polymers can be made which match the strength performance of the vinyl-acetate containing HMA formulations, but their ability to be formulated with non polar tackifiers render the resulting hot melt formulation more thermally stable than vinyl acetate containing hot melt adhesives.

However, neither the prior art involving vinyl acetate-based adhesives nor the prior art involving non-vinyl acetate containing polymer-based adhesives anticipates the present invention whereby a single synthetic polymer can be created that can substitute for both the wax and polymer components of a hot melt adhesive formulation.

As a solution to solve the above identified problem EP 1 631 640 B1 suggests to use homogenous ethylene/α-olefin interpolymer is further characterized by having:
i) a density of from about 0.880 to about 0.930 g/cm3; and
ii) a Brookfield Viscosity (measured at 149°C (300°F)) of from about 5 to about 70 grams/(cm second) (about 500 to about 7000 cP)
in combination with one or more tackifiers.
Thus, although a lot of development work has been done in the HMA field, there is still the need to provide improved solutions, which avoid the disadvantages of EVA and show improved properties, like better heat stability, improved low temperature performance, improved storage stability especially at high temperature and over a long period, improved colour retention and minimise yellowness issue (resistance to oxidative degradation), High level of compatibility with other components with good swelling capability, etc..

The inventors of the present invention have surprisingly found that the use of a specific class of metallocene catalyzed ethylene based plastomers provides hot melt adhesive compositions which combine the advantages of EVA based HMAs and avoiding their disadvantages with such improved properties as described above.

### Summary of the present inventions

Thus, the present invention is in a first aspect directed to a hot melt adhesive composition being composed of
A) at least one metallocene catalyzed ethylene based plastomers being a copolymer of ethylene and a C₄ to C₁₀ alpha olefin with
   (i) a density according to ISO 1183 in the range of 855 to 910 kg/m³,
   (ii) an MFR₂ according to ISO 1133 (190°C, 2.16kg) in the range of 55 to 100 g/10 min,
   (iii) a viscosity eta_{0.05} (measured according to ISO 6721-1 and 10 at 0.05 rad/s and at 177°C) of from 100 Pa.s to 200 Pa.s
   (iv) a molecular weight distribution (Mw/Mn, measured with GPC) in the range of 2.6 to 3.5
B) optionally one or more tackifiers and/or
(C) one or more plasticizers and/or
(D) one or more waxes.

In a further aspect the present invention is directed to the use of such compositions particularly for bookbinding, packaging, diapers, furniture, footwear and transportation.

*In the following the invention is described in more detail.*
The hot melt adhesive composition according to the present invention comprises a specific class of metallocene catalyzed ethylene based plastomers.

Such metallocene catalyzed ethylene based plastomers are copolymers of ethylene and a C₄ to C₁₀ alpha olefin being produced with a metallocene catalyst and having specific density and MFR₂ ranges.

Suitable C₄- C₁₀ alpha-olefin include 1-butene, 1-hexene and 1-octene, preferably 1-butene or 1-octene and more preferably 1-octene.
Preferably copolymers of ethylene and 1-octene are used.

Suitable ethylene based plastomers have a density (ISO 1183) in the range of 855 to 910 kg/m³, preferably in the range of 860 to 900 kg/m³ and more preferably in the range of 870 to 890 kg/m³.
The MFR₂ (ISO 1133; 190°C; 2.16kg) of suitable ethylene based plastomers is in the range of 55 to 100 g/10 min, preferably in the range of 65 to 95 g/10 min and more preferably in the range of 75 to 90 g/min.

Furthermore the ethylene based plastomers have a viscosity eta_{0.05} (measured according to ISO 6721-1 and 10 at 0.05 rad/s and at 177°C) of from 100 Pa.s to 200 Pa.s, preferably from 110 Pa.s to 180 Pa.s and more preferably from 120 Pa.s to 150 Pa.s.

The viscosity eta_{0.05} (measured according to ISO 6721-1 and 10 at 0.05 rad/s and at 149°C) of such plastomers is in the range of from 220 Pa.s to 300 Pa.s, preferably from 240 Pa.s to 290 Pa.s and more preferably from 250 Pa.s to 270 Pa.s.

The melting points (measured with DSC according to ISO 11357-1) of suitable ethylene based plastomers are below 100°C, preferably below 90°C and more preferably below 80°C.

Suitable copolymers of ethylene and a C₄ - C₁₀ alpha olefin have an ethylene content from 60 to 95 wt%, preferably from 65 to 90 wt% and more preferably from 70 to 88 wt%.

The molecular mass distribution Mw/Mn of suitable ethylene based plastomers is in the range of 2.6 to 3.5, preferably in the range of 2.6 to 3.2 and more preferably in the range of 2.7 to 3.0.

These ethylene based plastomers can be prepared by known processes, in a one stage or two stage polymerization process, comprising solution polymerization, slurry polymerization, gas phase polymerization or combinations therefrom, in the presence of suitable metallocene catalysts, known to the art skilled persons.

Preferably these ethylene based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100°C. Preferably the polymerization temperature is at least 110°C, more preferably at least 150°C. The polymerization temperature can be up to 250°C.

The pressure in such a solution polymerization process is preferably in a range of 10 to 100 bar, preferably 15 to 100 bar and more preferably 20 to 100 bar.
The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the COMPACT technology.

The ethylene based plastomer (A) can be the only component of the hot melt adhesive composition or it can preferably furthermore include one or more tackifiers (B) and/or one or more plasticizers (C) and/or one or more waxes (D).

The tackifier (B) is preferably selected in the group consisting of aliphatic, alicyclic and aromatic resin, and modified material and hydrogenated derivatives thereof, rosin and modified materials and derivatives of rosin, terpenes and modified materials and derivatives of terpenes. The tackifier can be one of the above resins, or can be a combination of more than one of the above resins.
Thus, as used herein, the term "tackifier" include:
(a) aliphatic and cycloaliphatic petroleum hydrocarbon resins having Ring and Ball softening points of from 10°C to 160°C, as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins; examples of such commercially available resins based on a C5 olefin fraction of this type are Piccotac 95 tackifying resin sold by Hercules Corp. and Escoreze 1310LC solid by ExxonMobil Chemical Company;
(b) Aromatic petroleum hydrocarbon resins and the hydrogenated derivatives thereof;
(c) Aliphatic/aromatic petroleum derived hydrocarbon resins and the hydrogenated derivatives thereof;
(d) Aromatic modified cycloaliphatic resins and the hydrogenated derivatives thereof;
(e) Polyterpene resins having a softening point of from about 10°C to about 140°C, the latter polyterpene resins generally resulting from the polymerization of terpene hydrocarbons, such as the mono-terpene known as pinene, in the presence of Friedel-Crafts catalysts at moderately low temperatures; also included are the hydrogenated polyterpene resins;
(f) Copolymers and terpolymers of natural terpenes, e.g. styrene/terpene, α-methyl styrene/terpene and vinyl toluene/terpene;
(g) natural and modified rosin such as, for example, gun rosin, wood rosin, tall-oil rosin, distilled rosin, hydrogenated rosin, dimerized rosin and polymerized rosin;
(h) glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;
(i) phenolic-modified terpene resins such as, for example, the resin product resulting from the condensation in an acidic medium of a terpene and a phenol;
Mixtures of two or more of the above described tackifiers may be required for some formulations.

Preferably, the tackifiers can be selected from any of the nonpolar types, which are commercially available. e.g. Eastotac from Eastman Chemical Co., Escorez from Exxon Chemical Co., Wingtack from Goodyear Chemical Co., Hercolite from Hercules Inc., Zonatac from Arizona Chemical Co. Preferred resins are aliphatic petroleum hydrocarbon resins examples of which are based on C5 olefins such as Hercotac 1148 available from Hercules Corp. Most preferred are nonpolar products which are hydrogenated di-cyclo-penta-diene (DCPD) based or aromatically modified derivatives thereof with softening points above 70°C. Examples of such resins are Escoreze 5400 and Escoreze 5600 sold by ExxonMobil Chemical company.

If one or more tackifiers are present as component B in the hot melt adhesive composition of the present invention the amount of component B is in the range of 10 to 70 wt% (based on the total weight of the composition), preferably in the range of 15 to 60 wt%.

The hot melt adhesive composition of the present invention can optionally further comprise plasticizer(s) (C) and/or a wax component(s) (D).

The plasticizer(s) which can be utilized in the hot melt adhesive of the present invention provide viscosity control and wetting and specific adhesion to bonded substrates. These plasticizers are selected from a group comprising paraffin oils, chlorinated paraffines, phthalates and adipate esters, oligomers of polypropylene, polybutenes, polyisoprene, hydrogenated polyisoprene and polybutadiene, benzoate esters (e.g. 1,4-cyclohexane dimethanol dibenzoate, glyceryl tribenzoate or pentaerythriol tetrabenzoate), and vegetable and animal oils and derivatives thereof and mixtures of two or more of any of the foregoing. The preferred primary plasticizer is a benzoate or paraffinic oil, a commercial grade of paraffinic oil widely used is available from Witco under the tradename Kaydol oil.

Plasticizers can broadly represent from about 0 to about 60 wt% of the hot melt adhesive of this invention and preferably represent from about 15 to about 25 parts by weight of the hot melt adhesive of this invention.

Wax component(s) can also be optionally utilized in the present invention. Wax components are useful for multi-purpose hot melt adhesives, in that these components offer additional wetting and added creep resistance for foamed elastic attachments. These wax additives can be selected from a group comprised of paraffin wax, microcrystalline wax, Fischer-Tropsch wax, fatty amide waxes, polyethylene wax, ethylene vinyl acetate wax, oxidized polyethylene wax, hydrogenated castor oil and derivatives thereof, polypropylene wax and mixtures of two or more of any of the foregoing. The preferred waxes for the present invention are selected from a group of oxidized polyethylene waxes, of which a commercial grade is available from Allied Signal under the tradename AC-395. Wax component(s) can represent from 0 to about 10 wt% of the hot melt adhesive of this invention and preferably represent from about 3 to about 7 wt% of the hot melt adhesive of this invention.

Thus the hot melt adhesive may be composed of
A) at least one metallocene catalyzed ethylene based plastomers being a copolymer of ethylene and a C₄ to C₁₀ alpha olefin as defined above in an amount of 10 to 80 wt% and
(B) one or more tackifiers in an amount of 10 to 70 wt% and
(C) one or more plasticizers in an amount of 0 to 60 wt% and/or
(D) one or more waxes. in an amount of 0 to 10 wt%

If necessary, the hot melt adhesive composition according to the present invention may further contain various additives. Examples of the various additives include a stabilizer and fine particle filler.

The "stabilizer" is blended so as to improve stability of the hot melt adhesive by preventing decrease in molecular weight, gelation, coloration, and generation of odor of the hot melt adhesive due to heat, and there is no particular limitation on the stabilizer as long as the objective hot melt adhesive of the present invention can be obtained. Examples of the "stabilizer" include an antioxidant and an ultraviolet absorber.

The "ultraviolet absorber" is used so as to improve light resistance of the hot melt adhesive. The "antioxidant" is used so as to prevent oxidation degradation of the hot melt adhesive. The antioxidant and ultraviolet absorber are commonly used in disposable products and can be used without particular limitation as long as the below-mentioned objective disposable products can be obtained.

Examples of the antioxidant include a phenol-based antioxidant, a sulfur-based antioxidant and a phosphorus-based antioxidant. Examples of the ultraviolet absorber include a benzotriazole-based ultraviolet absorber and a benzophenone-based ultraviolet absorber. It is also possible to add a lactone-based stabilizer. These additives can be used alone, or in combination.

It is possible to use, as the stabilizer, commercially available products. Examples thereof include SUMILIZER GM (trade name), SUMILIZER TPD (trade name) and SUMILIZER TPS (trade name) manufactured by Sumitomo Chemical Co. Ltd.; IRGANOX 1010 (trade name), IRGANOX HP2225FF (trade name), IRGAFOS 168 (trade name) and IRGANOX 1520 (trade name) manufactured by Ciba Specialty Chemicals Inc.; and JF77 (trade name) manufactured by Johoku Chemical Co., Ltd. These stabilizers can be used alone, or in combination.

The hot melt adhesive for disposable products of the present invention can further include fine particle filler. Commonly used fine particle filler may be used, and there is no particular limitation as long as the objective hot melt adhesive of the present invention can be obtained. Examples, of the "fine particle filler" include mica, calcium carbonate, kaolin, talc, titanium oxide, diatomaceous earth, urea-based resin, styrene beads, calcined clay, starch and the like. These particles preferably have a spherical shape, and there is no particular limitation on the size (diameter in case of a spherical shape).

The hot melt adhesive composition of the present invention can be produced by blending the component (A) with optional component (B), blending optionally the components (C) and/or the component (D), if necessary adding the various additives, and melting the mixture with heating, followed by mixing. Specifically, the hot melt adhesive can be produced by charging the above components in a melt-mixing vessel equipped with a stirrer, followed by heating and mixing.

The hot melt adhesive composition of the present invention has many advantageously properties compared to state of the art compositions which originate from the specific ethylene based plastomer (A).
The most important ones are
- excellent impact resistance and good flexibility at low temperature applications (down to -30°C)
- Good cohesive strength with simultaneously higher tensile strength
- Good tacky property at elevated temperature, including hot tack and wet ability, while maintaining cohesive strength
- Low level of volatile and emission
- High level of compatibility with other components with good swelling capability (filler acceptance)
- Better colour retention and minimise yellowness issue (resistance to oxidative degradation)
- Better heat stability:
- Adhesion to non-polar substrates, e.g. PE, PET, etc.
- Low temperature performance: no brittle
- Low temperature adhesion
- Better compatibility with wide range of hydrocarbon resins
- Easy process: easy to melt and blending, easy mixing
- Clean and sustainable material

The hot melt adhesive composition of the present invention may be applied to a desired substrate by any method known in the art, and include, without limitation roll coating, painting, dry-brushing, dip coating, spraying, slot-coating, swirl spraying, printing (e.g., ink jet printing), flexographic, extrusion, atomized spraying, gravure (pattern wheel transfer), electrostatic, vapor deposition, fiberization and/or screen printing.

The hot melt adhesive composition of the invention are useful as construction adhesives, core adhesives or elastic adhesives, and are particularly suitable for being used for packaging applications and disposables.
Examples of disposables are diapers, adult incontinent products, bed pads, a sanitary napkin, a pet sheet, a hospital gown, surgical capes, drapes or white garment and the like.

Packaging applications are for example like liquid packaging for milk, juice, wine or other liquids, flexible packaging for food like meat and cheese and medical products, rigid packaging like detergent cartons, cup and plate boards for oven or microwave use or sterilizable food packaging, but also for photographic paper or industrial applications like paper reel and ream wraps.

In addition the hot melt adhesive composition of the invention can be used in the field of bookbinding, furniture, footwear and transportation.

### Experimental Part

### Methods:

**MFR₂ (190°C)** is measured according to ISO 1133 (190 °C, 2.16 kg load).
**Density** is measured according to ISO 1183.
**Melting temperature Tm**
   The melting temperature Tm, was measured with a TA Instruments Q2000 differential scanning calorimetry device (DSC) according to ISO 11357/3 on 5 to 10 mg samples. Melting temperatures were obtained in a heat/cool/heat cycle with a scan rate of 10°C/min between 30°C and 180°C. Melting and crystallisation temperatures were taken as the peaks of the endotherms and exotherms in the cooling cycle and the second heating cycle respectively.
**Number average molecular weight (Mₙ), weight average molecular weight (M_{w}) and polydispersity (Mw/Mn)** are determined by Gel Permeation Chromatography (GPC) according to the following method:
   The weight average molecular weight Mw and the polydispersity (Mw/Mn), wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145°C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160°C) of stabilized TCB (same as mobile phase) and keeping for 3 hours with continuous shaking prior sampling in into the GPC instrument.
**Comonomer content in polyethylene** was measured in a known manner based on Fourier transform infrared spectroscopy (FTIR) calibrated with 13C-NMR, using Nicolet Magna 550 IR spectrometer together with Nicolet Omnic FTIR software.
   Films having a thickness of about 250 µm were compression molded from the samples.
   Similar films were made from calibration samples having a known content of the comonomer. The comonomer content was determined from the spectrum from the wave number range of from 1430 to 1100 cm-1. The absorbance is measured as the height of the peak by selecting the so-called short or long base line or both. The short base line is drawn in about 1410 - 1320 cm-1 through the minimum points and the long base line about between 1410 and 1220 cm-1. Calibrations need to be done specifically for each base line type. Also, the comonomer content of the unknown sample needs to be within the range of the comonomer contents of the calibration samples.

### Viscosity eta_{0.05}

The characterization of polymer melts by dynamic shear measurements complies with ISO standards 6721-1 and 6721-10. The measurements were performed on an Anton Paar MCR501 stress controlled rotational rheometer, using cone-plate geometry (diameter 25 mm, angular of 1° of the cone). Measurements were undertaken on compression molded plates, using nitrogen atmosphere and setting a strain within the linear viscoelastic regime. The oscillatory shear tests were done at a temperature of 177°C and 149°C applying a frequency of 0.05 rad/s and setting a gap of 1.3 mm.

The values of viscosity (η*) were obtained as a function of frequency (ω). Thereby, e.g. η*_{0.05 rad/s} (eta_{0.05}) is used as abbreviation for the viscosity at the frequency of 0.05 rad/s

The values are determined by means of a single point interpolation procedure, as defined by Rheoplus software, the option from Rheoplus "-Interpolate y-values to x-values from parameter" and the "logarithmic interpolation type" wasapplied.

### Material used:

ethylene-octene plastomer (8285LA) from the Queo grade family provided by Borealis was used. The plastomer is produced in a solution polymerisation process (Compact) using a metallocene catalyst and has the following properties as shown in Table 1.

**Table 1:**

| Property | unit | |
|---|---|---|
| Density | kg/m³ | 882 |
| MFR₂ | g/10 min | 85 |
| Melting point Tm | °C | 76 |
| C₈-content | wt% | 26.8 |
| C₂-content | wt% | 73.2 |
| MWD | - | 2.8 |
| Eta_{0.05} (177°C) | Pa.s | 134 |
| Eta_{0.05} (149°C) | Pa.s | 260 |

## Claims

1. Hot melt adhesive composition being composed of
A) at least one metallocene catalyzed ethylene based plastomers being a copolymer of ethylene and a C₄ to C₁₀ alpha olefin with
(i) a density according to ISO 1183 in the range of 855 to 910 kg/m³,
(ii) an MFR₂ according to ISO 1133 (190°C, 2.16kg) in the range of 55 to 100 g/10 min,
(iii) a viscosity eta_{0.05} (measured according to ISO 6721-1 and 10 at 0.05 rad/s and at 177°C) of from 100 Pa.s to 200 Pa.s
(iv) a molecular weight distribution (Mw/Mn, measured with GPC) in the range of 2.6 to 3.5 B) optionally one or more tackifiers and/or
(C) one or more plasticizers and/or
(D) one or more waxes.

2. Hot melt adhesive composition according to claim 1, wherein the metallocene catalyzed ethylene based plastomer is a copolymer of ethylene and octene.

3. Hot melt adhesive composition according to claim 1 or 2, wherein the metallocene catalyzed ethylene based plastomer has a density in the range of 860 to 900 kg/m³ (ISO 1183) and an MFR₂ according to ISO 1133 (190°C, 2.16kg) in the range of 65 to 95 g/10 min.

4. Hot melt adhesive composition according to anyone of the preceding claims, wherein the metallocene catalyzed ethylene based plastomer has a viscosity eta_{0.05} (measured according to ISO 6721-1 and 10 at 0.05 rad/s and at 149°C) is in the range of from 220 Pa.s to 300 Pa.s.

5. Hot melt adhesive composition according to anyone of the preceding claims, wherein the metallocene catalyzed ethylene based plastomer has a melting point (measured with DSC according to ISO 11357-1) of below 100°C.

6. Hot melt adhesive composition according to anyone of the preceding claims, wherein the metallocene catalyzed ethylene based plastomer has been prepared by a one stage or two stage solution polymerization process, preferably by high temperature solution polymerization process at temperatures higher than 100°C.

7. Hot melt adhesive composition according to anyone of the preceding claims, which is composed of
A) at least one metallocene catalyzed ethylene based plastomers being a copolymer of ethylene and a C₄ to C₁₀ alpha olefin as defined above in an amount of 10 to 80 wt% and
B) one or more tackifiers in an amount of 10 to 70 wt% and
(C) one or more plasticizers in an amount of 0 to 60 wt% and/or
(D) one or more waxes. in an amount of 0 to 10 wt%

8. Hot melt adhesive composition according to anyone of the preceding claims, wherein the optional tackifiers can be selected from
(a) aliphatic and cycloaliphatic petroleum hydrocarbon resins having Ring and Ball softening points of from 10°C to 160°C, as determined by ASTM method E28-58T,
(b) Aromatic petroleum hydrocarbon resins and the hydrogenated derivatives thereof;
(c) Aliphatic/aromatic petroleum derived hydrocarbon resins and the hydrogenated derivatives thereof;
(d) Aromatic modified cycloaliphatic resins and the hydrogenated derivatives thereof;
(e) Polyterpene resins having a softening point of from about 10°C to about 140°C,
(f) Copolymers and terpolymers of natural terpenes, e.g. styrene/terpene, α-methyl styrene/terpene and vinyl toluene/terpene;
(g) natural and modified rosin;
(h) glycerol and pentaerythritol esters of natural and modified rosin and
(i) phenolic-modified terpene resins

9. Hot melt adhesive composition according to anyone of the preceding claims, wherein the optional plasticizer can be selected from a group comprising paraffin oils, chlorinated paraffines, phthalates and adipate esters, oligomers of polypropylene, polybutenes, polyisoprene, hydrogenated polyisoprene and polybutadiene, benzoate esters and vegetable and animal oils and derivatives thereof.

10. Hot melt adhesive composition according to anyone of the preceding claims, wherein the optional plasticizer can be selected from a group comprising paraffin wax, microcrystalline wax, Fischer-Tropsch wax, fatty amide waxes, polyethylene wax, ethylene vinyl acetate wax, oxidized polyethylene wax, hydrogenated castor oil and derivatives thereof, polypropylene wax

11. Use of hot melt adhesive composition according to anyone of the preceding claims as construction adhesives, core adhesives or elastic adhesives.

12. Use of hot melt adhesive composition according claim 11 for packaging applications and disposables.

13. Use according to claim 12, wherein the disposals are diapers, adult incontinent products, bed pads, a sanitary napkin, a pet sheet, a hospital gown, surgical capes, drapes or white garment.

14. Use of hot melt adhesive composition according claim 11 in the field of bookbinding, furniture, footwear and transportation.
